# EUROPEAN PATENT APPLICATION

(11) **EP 1 652 571 A1**
(43) Date of publication of application: **03.05.2006**
(21) Application number: 04077991.0
(22) Date of filing: 01.11.2004
(51) Int. Cl.: B01D 65/02, B01D 65/06

(54) **Cleaning of filtration membranes using peracids**

(71) Applicant: Akzo Nobel, 6824 BM Arnhem (NL)
(72) Inventor: Hogt, Andreas Herman, 7523 AB Enschede (NL); Tammer, Marinus Catharinus, 7431 ZA Diepenveen (NL)
(74) Representative: Schalkwijk, Pieter Cornelis

(57) **Abstract**

The present invention relates to a back-wash process for cleaning a filtration membrane comprising contacting the membrane with an aqueous solution comprising one or more water-soluble peracids derived from a carboxylic acid comprising two or more carboxylic acid moieties. Optionally, one or more activators and/or reductants are added to the aqueous solution as well, in order to improve the performance of the peroxide compound.

## Description

The invention relates to a process for cleaning filtration membranes using peracids.

In many chemical manufacturing processes large volumes of water are used, including raw, untreated water drawn from the immediate vicinity of the chemical plant. Such raw water contains many biologically active potential foulants as well as dissolved and suspended other foulants. As a result, it is necessary to treat such raw water streams before introduction into the plant processing systems. Furthermore, with more stringent anti-pollution standards it has also become necessary to treat most waste water or effluent streams leaving chemical plants in order to control the biological oxygen demand (BOD), colour, etc. before the water can be discharged.
Sand filtration and gravity precipitation are techniques which were often applied in water purification treatments for solid-liquid separation, treatments of sewage and waste water, and treatments of industrial waste water. Nowadays, different types of filtration membranes, such as precision filtration membranes, ultrafiltration membranes, microfiltration membranes, nanofiltration membranes, or reverse osmosis membranes are often applied for the removal of a large variety of pollutants and foulants from water streams. When said water is subjected to filtration treatment with these types of membranes, high-quality treated water can be obtained.

US 3,758,405, for example, describes a continuous method of removing and disposing of coloured particles present in aqueous effluents from Kraft pulping operations by using ultrafiltration techniques. However, a problem which arises when using filtration membranes in these types of processes is that suspended solids can clog the membranes and a foulant layer can build up on their surfaces. Such fouled membranes will exhibit a decreased filtration flow rate and/or an increased differential pressure between the membranes. Hence, said membranes have to be cleaned regularly.

A commonly used cleaning method for fouled membranes is a back-wash procedure. Back-washing is typically conducted by pumping permeate back into the feed channel to lift deposited material off the membrane surface. Typically, periodically one or more chemical aids are added to the back-washing water in order to improve cleaning. This method is commonly referred to as Chemical Enhanced Back-wash (CEB). Often oxidative chemicals such as sodium hypochlorite, hydrogen peroxide, hypohalous acids, and the like are employed.
JP 2000117069, for example, describes a sterilisation and washing process for a hollow fibre type ultra- or micro-filtering membrane module used in the purification of raw water. In said process, an oxidising germicide containing peracetic acid, hydrogen peroxide, and acetic acid is incorporated into back-washing water of the filter membrane module, and the back-washing is periodically performed for 0.5-2 minutes every 0.3-2 hours. After back-washing of the filtering membrane module, a rest period of 0.5-10 minutes is provided.
US 5,647,988 pertains to a method for cleaning ceramic membranes used in water-purification plants and the like, by using a back-washing method in combination with an oxidising agent such as sodium hypochlorite, chlorine, and chlorine dioxine, followed by a washing with sodium bisulfate as a reducing agent.

However, the effectiveness of back-wash processes is largely dependent on the nature of the foulants which form the deposits which clog the membrane pores, their interaction with the membrane surface, and particularly, their interaction with the chemical aid used for cleaning the membrane. Typically, membrane fouling is caused by a mixture of various components present in the aqueous stream to be filtered, which all have a different interaction with the membrane surface and the chemical aid. It is therefore an object of the present invention to provide an effective cleaning process for filtration membranes used for filtering aqueous streams using chemical aids which have wide-ranging applicability.

It was surprisingly found that if a back-wash process for cleaning a filtration membrane used for filtering aqueous streams comprises a step wherein the membrane is contacted with an aqueous solution comprising one or more water-soluble peracids derived from carboxylic acids having at least two or more carboxylic moieties per molecule, improved cleaning efficiency is observed. It was furthermore found that although the peracids according to the invention have wide-ranging applicability, they are especially suitable for removing biofouling. It is noted that the aqueous stream which is filtrated can be any aqueous stream, but preferably it is one comprising organic compounds and/or biomass contaminants. Most preferably, the aqueous stream comprises surface water, it is an aqueous stream originating from beer, wine, or milk production, or it is washing water, for example originating from vegetable washing.
The term "peracid derived from a carboxylic acid" is meant to denote the peracid(s) which will be formed by reaction of the corresponding carboxylic acid with an oxidising agent such as hydrogen peroxide. However, it is noted that said peracid(s) can also be made by reacting another precursor, such as for example the corresponding aldehyde, anhydride, ester, or amide, with a suitable oxidising agent such as hydrogen peroxide or oxygen or with perborates or percarbonates in the presence of acylating agents. It is furthermore noted that the peracids derived from the carboxylic acids according to the present invention are typically present in an aqueous solution as a mixture of the following components: (a) the carboxylic acid, (b) molecules with one or more peracid moieties and one or more free carboxylic acid moieties, (c) molecules having two or more peracids groups and no free carboxylic acid moieties, and (d) hydrogen peroxide. The term "cleaning agent" is used hereinafter to denote such a mixture wherein the just-mentioned components are in equilibrium with each other.

it is noted that by the term "water-soluble" is meant that the peracids have a solubility in water of at least 1 ppm, preferably of at least 2 ppm, and most preferably of at least 5 ppm.

Preferably, the peracid(s) according to the present invention is/are derived from a carboxylic acid selected from the group consisting of compounds according to formula I 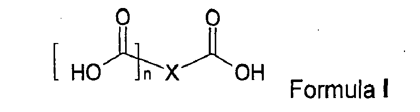 wherein X is a linear or branched alkyl or cycloalkyl group containing 1 to 16 carbon atoms, optionally comprising one or more hydroxyl, halogen, phosphonate, phosphate, ester, alkynyl, and/or ether groups, and n is 1 - 6;
and compounds according to formula II having an M_{w} of between 500 and 100,000, 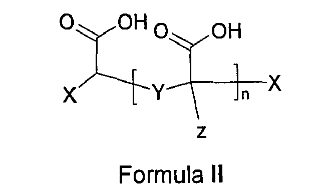 wherein n is 4 - 2,000, X is a linear or branched alkyl or cycloalkyl group containing 1 to 16 carbon atoms, optionally comprising one or more hydroxyl, halogen, phosphonate, phosphate, ester, alkynyl, and/or ether groups, Z is hydrogen or a linear or branched alkyl or cycloalkyl group containing from 1 to 6 carbon atoms, optionally comprising one or more hydroxyl, halogen, phosphonate, phosphate, ester, alkynyl, and/or ether groups, and Y is a linear or branched alkyl or cycloalkyl group containing 1 to 16 carbon atoms, optionally comprising one or more hydroxyl, halogen, phosphonate, phosphate, ester, alkynyl, and/or ether groups. It is noted that in the cleaning agent comprising peracids derived from a carboxylic acid according to formula II preferably on average 1-90% of the carboxylic acid moieties per molecule have been converted into peracid moieties.

More preferably, the peracid is derived from a carboxylic acid selected from the group consisting of malonic acid, succinic acid, tartaric acid, glutaric acid, adipic acid, pimelic acid, subertic acid, cyclohexane dicarboxylic acid, azelaic acid, sebacic acid, cyclohexane diacetic acid, undecanedioic acid, dodecanedioic acid, citric acid, 1,2,3-propanetricarboxylic acid, polyacrylic acid, polymethacrylic acid, polylactic acid, and polyglycolic acid. Preferably, the process according to the present invention is essentially free of nitroxyl compounds such as TEMPO.

WO 03/095078 already discloses a back-wash process for cleaning filters used in the beverage industry which are fouled by polyphenol-protein complexes and carbohydrate polymers, wherein the filters are subjected to an oxidative treatment using oxidative chemical aids such as inorganic or organic peracids. However, examples of the organic peracids used in this process are the monoperacids peracetic acid, perpropionic acid, perlauric acid, peroxytrifluoro-acetic acid, perbenzoic acid, and m-chloroperbenzoic acid. The use of the cleaning agent according to the present invention comprising a peracid derived from a carboxylic acid comprising at least two carboxylic acid moieties is not disclosed.

It was surprisingly found that the use of the cleaning agent according to the present invention leads to an increased cleaning activity compared to the cleaning activity of monoperacids such as, for instance, the commonly used peracetic acid. If, according to an unproven theory, in the filtration process for filtering aqueous streams membrane fouling starts with a complexation of multivalent metal ions such as alkaline earth metal ions and/or transition metal ions present in the aqueous stream which is filtrated onto the negative surface charge of the membrane, other components, such as negatively charged organic contaminants, will subsequently be able to adsorb on the membrane surface by complexing these metal ions on the membrane surface. Thus, pores of the membrane will be clogged, which will gradually result in reduced permeability and ultimately in an inefficient filtration process. Although the inventors do not wish to be bound by the following theory, it is believed that although the peracid moieties are responsibility for the oxidative activity, the excellent cleaning activity of the cleaning agents according to the present invention is due to the presence of one or more free carboxylic acid moieties in this cleaning agent. Because of these carboxylic acid moieties, the cleaning agent of the present invention has a larger affinity for penetrating into the fouling deposits on the membrane surface than peracids which do not have a free carboxylic acid moiety, because it will be able to adsorb on the membrane surface by complexing the metal ions present on membrane surface. As a result, higher concentrations of active oxidant will be present in close proximity to the membrane surface compared to when use is made of monoperacids which do not have such a metal ion complexating group. Thus, the organic compounds and/or biomass contaminations which fouled and clogged the membrane will be readily oxidised and/or decomposed due to reaction with the cleaning agent in the aqueous solution, so that the membrane is cleaned more effectively.

The aqueous solution used as the cleaning solution in the back-wash process according to the present invention can be part of the permeate originating from the filtration process which is pumped back after the addition of one or more water-soluble peracids according to the invention. However, the aqueous solution can also be a different aqueous stream. The one or more peracids according to the present invention may be dosed to said aqueous solution in any conventional manner. Preferably, an aqueous solution comprising the peracid(s) is dosed to the aqueous solution. Hereinafter such an aqueous solution will be referred to as a cleaning agent comprising pre-mix. However, the cleaning agent(s) can also be dosed to the aqueous solution in the form of a suspension or emulsion in water. In a particularly preferred embodiment, the cleaning agent(s) are formed *in situ* from a peracid precursor such as the corresponding carboxylic acid or anhydride and hydrogen peroxide, optionally in the presence of one or more chelating agents as stabilisers and optionally in the presence of a strong acid or base. These chelating agents are preferably employed to improve the storage stability of solutions according to the invention and are especially desirable where the proposed application involves the likely chance that the cleaning agent will be contacted with compounds known to cause decomposition, for example transition metal ions. Preferred chelating agents are often aminopolycarboxylic acids or salts thereof such as EDTA (ethylene diamine tetraacetic acid), HEDTA (hydroxyethyl ethylene diamine triacetic acid), or DTPA (diethylene triamine pentaacetic acid), and/or carboxylic acid substituted N-containing heterocycles, such as picolinic or dipicolinic acid 8-hydroxyquinoline, and organopolyphosphonates, including HEDP (1-hydroxyethylidene-1,1-diphosphonic acid), phosphonated amine derivatives like ATMP (amino (tri(methylene phosphonic acid)), and alkyleneaminomethylene phosphonic acids such as EDTMP (ethylene diamine-tetra-methylene phosphonic acid), ethylene diamino tetra-methylene phosphonic acid cyclohexane-1, 2-diaminotetramethylene phosphonic acid and diethylenetriaminepenta methylene phosphonic acid. Citric acid, gluconate, glucoheptanoate, lactate, and sorbitol are preferred chelating agents as well. A combination of an organophosphonate and EDTA is particularly suitable. The total amount of chelating agents in the aqueous solution is at the discretion of the formulator, but is preferably greater than 0.05wt% and often not greater than about 5.5wt%, calculated as active material therein.
The strong acid is preferably selected from the group consisting of H₂SO₄, H₃PO₄, HClO₄, and trifluoroacetic acid.

Typically, the total amount of peracid moieties present in the aqueous solution with which the filtration membrane is contacted is such that less than 100 mg of active oxygen is present per litre of aqueous solution. Preferably, less than 50 mg and more preferably less than 20 mg of active oxygen is present in the aqueous solution per litre thereof. Active oxygen is defined as the percentage ratio between the atomic mass of oxygen for each O-O bond present in the peracid and the molecular weight of said peracid, multiplied by the percentage by weight of the peracid present in the solution. This can be illustrated with the following, non-binding example: peracetic acid has one O-O group and a molar mass of 76.05; if its weight content in solution is- 32 g per litre, its active oxygen content will be (1 x 16 / 76.05) x 0.32 x 100 = 6.7 g per litre.
It is noted that the most common analytical method for determining the active oxygen content is iodometric (see for example D. Swern, *Organic Peroxides,* Vol. 1, Chapter 7; John Wiley & Sons, 1970). Active oxygen concentrations of higher than 100 mg per litre of the aqueous solution are also possible, but less preferred. Typically, more than 0.01 mg, preferably more than 0.1 mg, and most preferably more than 1 mg of active oxygen is present per litre of the aqueous solution.
It is also possible to add one or more activators to the aqueous solution in order to improve the performance of the peracid. The activator preferably is a metal salt wherein the metal ion has a suitable oxidation potential versus the peroxide compound. In a preferred embodiment of the present invention, the metal is selected from the group consisting of Fe, Mn, Cu, Ni, Cr, V, Ce, Mo, and Co. In another preferred embodiment, an amino group-containing compound is employed. Suitable amine compounds for use in the process according to the present invention include dimethyl aniline, diethyl aniline, dimethyl toluidine, polymeric aromatic amines, quaternary amines, nitroxides, and amine salts. In yet another preferred embodiment of the present invention, the activating metal ion is complexed with or incorporated into the peracid.

Normally, the total amount of activator(s) present in the aqueous solution is less than 1,000 mol% per litre of aqueous solution, based on the total amount of peracid(s) present per litre of the aqueous solution. Preferably, less than 300 mol%; and more preferably less than 150 mol% is present per litre of aqueous solution, based on the total amount of moles of peracid(s) present per litre of the aqueous solution. Normally, more than 0.1 mol%, preferably more than 1 mol%, and most preferably more than 10 mol% of activator(s) is present per litre of aqueous solution, based on the total amount of moles of peracid(s) present per litre of the aqueous solution. It is noted that when using chelating agent(s), the amount of activator(s) is preferably increased about two-fold, most preferably about four-fofd.

In the process according to the present invention, reductants can be used in order to improve the performance of the peracid(s). Preferred reductants include but are not limited to ascorbic acid, citric acid, tartaric acid, oxalic acid, sodium formaldehyde sulfoxylate, and (bi)sulfite salts. Normally, the total amount of reductant(s) present in the aqueous solution is less than 1,000 mol% per litre of aqueous solution, based on the total amount of moles of peracid(s) present per litre of the aqueous solution. Preferably, less than 300 mol%, and more preferably less than 150 mol% is present per litre of aqueous solution, based on the total amount of moles of peracid(s) present per litre of the aqueous solution. Normally, more than 0.1 mol%, preferably more than 1 mol%, and most preferably more than 10 mol% of reductant(s) is used per litre of aqueous solution, based on the total amount of moles of peracid(s) present per litre of the aqueous solution.

When using reductant(s), the amount of activator(s) can be reduced about tenfold, most preferably in the range of 0-20 mol%. If the water in the aqueous solution already contains a sufficient amount of metal salt suitable as activator, such as an iron source, the separate addition of one or more activators to the aqueous solution may not be necessary at all.

It is also possible to add one or more surfactants to the aqueous solution, optionally in combination with one or more activators and/or one or more reductants and/or one or more chelating agents. Suitable surfactants include conventional cationic, anionic, and non-ionic surfactants. For example, alkali (earth) metal salts of fatty acids, mono-, bi-, and poly-quaternary ammonium salts, and fatty amine derivatives can be applied.

If desired, one or more conventional pH regulators may be added to the aqueous solution as well, provided they do not negatively affect the cleaning process according to the present invention.

In a particularly preferred embodiment, hydrogen peroxide and the peroxide precursor are pre-mixed to form a cleaning agent comprising pre-mix before dosing to the aqueous solution. As already indicated above, it is believed that the oxidatively most active components of the cleaning agent in the cleaning process according to the present invention are peracids comprising at least one free carboxylic acid moiety. Therefore, the equilibrium between the components of the cleaning agent is preferably influenced such that these free carboxylic acid moieties-containing peracids form the main component of the cleaning agent by tuning the H₂O₂ concentration in the pre-mix. As a result, preferably the H₂O₂ concentration in the pre-mix is less than 40wt%, more preferably less than 30wt%, and even more preferably less than 25wt%, based on the total weight of the pre-mix. Preferably, the H₂O₂ concentration in the pre-mix is more than 0.1wt%, more preferably more than 1wt%, and most preferably more than 5wt%, based on the total weight of the pre-mix.

Preferably, such a pre-mix comprises, based on the total weight of said pre-mix:
1 ― 40 wt% of hydrogen peroxide,
0.005 ― 3 wt% of one or more chelating agents,
0.1 ― 30 wt% of an organic acid with two or more acid moieties,
0 ― 10 wt% of a strong acid,
10 ― 90 wt% water, and
0.1 ― 40 wt% of peracid, up to a total of 100 wt%, in order to have 0.01 - 8 wt% of peracid active oxygen present in the pre-mix.

More preferably, such a pre-mixed solution comprises, based on the total weight of said pre-mix:
5 ― 30 wt% of hydrogen peroxide,
0.03 ― 1 wt% of one or more chelating agents, .
1 ― 20 wt% of an organic acid with two or more acid moieties;
0.05 ― 3 wt% of a strong acid,
50 ― 85 wt% water, and
1 ― 30 wt% of peracid, up to a total of 100 wt%, in order to have 0.1 ― 4 wt% of peracid active oxygen present in the pre-mix.

Especially preferred pre-mixes are mixtures comprising, based on the total weight of said pre-mix:
2 ― 25 wt% of hydrogen peroxide,
1 - 30 wt% of perglutaric acid or persuccinic acid,
1 ― 20 wt% of the corresponding carboxylic acid,
0.03 ― 1 wt% of one or more stabilisers,
0.05 ― 3 wt% of a strong acid, and
50 ― 85 wt% water, up to a total of 100 wt%.

The term filtration membrane as used throughout this specification can apply to any conventional polymeric and/or ceramic filtration membrane. In general, these membranes are characterised by their MWCO (molecular weight cut-off) and/or their retention values for inorganic salts and/or small organic molecules. The membranes suitable for use in the process according to the present invention include reverse osmosis membranes (pores smaller than 0.11 nm), nanofiltration membranes (0.8 nm up to 9 nm pores), ultrafiltration membranes (3 nm up to 100 nm pores), microfiltration membranes (50 nm up to 3 µm pores), and particle-fiitration membranes (2µm up to 2 mm pores). The person skilled in the art can select the proper membrane on the basis of common general knowledge. Particularly preferred membranes are ultrafiltration and microfiltration membranes. Preferably, the process according to the invention is not used for cleaning a contaminated semipermeable membrane which is employed in a pervaporation or vapour permeation procedure wherein water is transported through said semipermeable membrane.

It is to be understood that the back-wash process according to the present invention can also be part of a conventional cleaning-in-place (CIP) procedure, *i.e.* a cleaning process of a membrane wherein said membrane is temporarily removed from operation to be contacted with the aqueous solution according to the present invention by circulation.
In the back-wash process according to the present invention, preferably at least 0.1 litre, more preferably at least 10 litres, and most preferably at least 50 litres of the aqueous solution are forced through the membrane per hour per m² of membrane surface. Preferably, at most 1,000 litres, more preferably at most 750 litres, and most preferably at most 500 litres of the aqueous solution are forced through the membrane per hour per m² of membrane surface. However, preferably a pressure of between 1 and 10 bar is used. It is noted that in a particularly preferred embodiment the back-wash pressure is greater than the normal operating inlet pressure.
Depending on the degree of fouling of the membrane, the present back-wash process is preferably performed for a period of time of at least 0.1 min, more preferably at least 0.5 min, most preferably at least 1 min. However, preferably the present back-wash process is performed for at most 36 hours, more preferably 24 hours, and most preferably for at most 6 hours.

How often a filtration membrane needs to be cleaned using the aqueous treatment solution according to the present invention depends on the purity of the aqueous stream subjected to the filtration treatment, the flow rate of said aqueous stream, and the capacity of the filtration membrane, and can be easily determined by the skilled person. In practice, however, according to the back-wash process the filtration membranes are preferably cleaned at least every month, more preferably at least every week, even more preferably every two days, and most preferably at least every 24 hours. In some cases it is recommended to perform the back-wash process every 5 min. However, in any case it is recommended to perform the back-wash process according to the method of the present invention when the differential pressure over the filtration membrane, at constant flux, is at least 10% higher than the differential pressure over such a filtration membrane when it is used for the first time.

After the cleaning process according to the present invention, the filters are preferably rinsed with water several times before re-use.

### Example

It was found that when using an aqueous solution containing a cleaning agent according to the present invention for cleaning a fouled filtration membrane in a back-wash procedure, the filtration efficiency of the membrane is restored to a significantly larger extent than when an aqueous solution comprising peracetic acid is used.

## Claims

1. A. back-wash process for cleaning a filtration membrane comprising contacting the membrane with an aqueous solution comprising one or more water-soluble peracids derived from a carboxylic acid comprising two or more carboxylic acid moieties.

2. A process according to claim 1 wherein the carboxylic acid is selected from the group consisting of compounds according to formula I 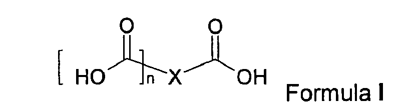 wherein X is a linear or branched alkyl or cycloalkyl group containing 1 to 16 carbon atoms, optionally comprising one or more hydroxyl, halogen, phosphonate, phosphate, ester, alkynyl, and/or ether groups, and n is 1-6; and compounds according to formula II having an M_{w} of between 500 and 100,000, 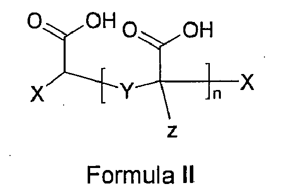 wherein n is 4 - 2,000, X is a linear or branched alkyl or cycloalkyl group containing 1 to 16 carbon atoms, optionally comprising one or more hydroxyl, halogen, phosphonate, phosphate, ester, alkynyl, and/or ether groups, Z is hydrogen or a linear or branched alkyl or cycloalkyl group containing from 1 to 6 carbon atoms, optionally comprising one or more hydroxyl, halogen, phosphonate, phosphate, ester, alkynyl, and/or ether groups, and Y is a linear or branched alkyl or cycloalkyl group containing 1 to 16 carbon atoms, optionally comprising one or more hydroxyl, halogen, phosphonate, phosphate, ester, alkynyl, and/or ether groups.

3. A process according to claim 1 or 2 wherein the carboxylic acid is selected from the group consisting of malonic acid, succinic acid, tartaric acid, glutaric acid, adipic acid, pimelic acid, subertic acid, cyclohexane dicarboxylic acid, azelaic acid, sebacic acid, cyclohexane diacetic acid, undecanedioic acid, dodecanedioic acid, citric acid, 1,2,3-propanetricarboxylic acid, polyacrylic acid, polymethacrylic acid, polylactic acid, and polyglycolic acid.

4. A process according to any one of the preceding claims wherein the peracid is perglutaric acid or succinic acid.

5. A process according to any one of claims 1-3 wherein the peracid is derived from a carboxylic acid according to formula II wherein, on average, 1-90% of the carboxylic acid moieties per molecule have been converted into peracid moieties.

6. A process according to any one of the preceding claims wherein one or more activators and/or one or more reductants are added to the aqueous solution.

7. A process according to claim 6 wherein the activator comprises a Fe-salt, an Mn-salt, a Cu-salt, a Ni-salt, a Co-salt, or an amine compound, and preferably, said activator comprises a Fe-salt.

8. A process according to claim 6 wherein the reductant is selected from the group consisting of oxalic acid, a (bi)sulfite salt, ascorbic acid, isoascorbic acid, and sodium formaldehyde sulfoxylate.

9. A process according to any one of the preceding claims wherein the aqueous solution furthermore comprises one or more chelating compounds and/or one or more surfactants.

10. A process according to any one of the preceding claims wherein the membrane is selected from the group consisting of a reverse osmosis membrane; a nanofiltration membrane, an ultrafiltration membrane, a microfiltration membrane, and a particle filtration membrane.

11. A process according to any one of the preceding claims wherein the total amount of active oxygen in the aqueous solution is less than 100 mg per litre of aqueous solution.

12. A process according to any one of the preceding claims wherein the back-wash with the aqueous solution is performed for period of time between 0.5 min and 36 hours at a pressure of between 1 and 10 bar, such that between 0.1 litre and 200 litres of the aqueous solution are forced through the membrane per hour per m² of membrane surface.

13. A process according to any one of the preceding claims wherein back-washing with the aqueous solution is part of a cleaning-in-place process.
